# EUROPEAN PATENT SPECIFICATION

(11) **EP 3 459 877 B1**
(45) Date of publication and mention of the grant of the patent: **15.05.2024**
(21) Application number: 17799458.9
(22) Date of filing: 18.05.2017
(51) Int. Cl.: B65D 90/00, B63B 25/00, B65D 88/12

(54) **ARRANGEMENT COMPRISING A CONTAINER-SECURING DEVICE**
ANORDNUNG AUFWEISEND EINE BEHÄLTERSICHERUNGSVORRICHTUNG
AGENCEMENT COMPRENANT UN DISPOSITIF DE FIXATION DE RÉCIPIENT

(30) Priority: 19.05.2016 JP 2016100661
(43) Date of publication of application: 27.03.2019
(73) Proprietor: Minato Seiki Iron Works Co., Ltd., Takatsuki City, Osaka 569-0832 (JP)
(72) Inventor: TAKAGUCHI Hiroyuki, Nishisonogi-gun Nagasaki 851-2121 (JP)
(74) Representative: Grünecker Patent- und Rechtsanwälte PartG mbB
(86) International application number: PCT/JP2017/018619
(87) International publication number: WO 2017/200034

(56) References cited:
- WO-A2-2007/142531
- DE-A1-102009 035 201
- JP-A- 2009 255 927
- JP-A- 2013 521 199
- US-A1- 2003 034 654
- US-A1- 2010 089 914
- US-B1- 6 490 766
- US-B1- 6 490 766

## Description

### TECHNICAL FIELD

The present invention relates to an arrangement comprising a container securing devices for fixing containers which are stacked one another, and/or for fixing containers onto a cargo bed of a trailer or a railroad freighter.

### BACKGROUND ART

JP-B No. 4781786 discloses a container securing device of a so called latch-lock type. As shown in Fig. 19 and Fig. 20, the container securing device includes: a flange 1002 disposed between upper and lower corner castings 1100a of stacked containers 1100; an upper support pillar 1003 and a lower support pillar 1004 protruding from the flange 1002; an upper cone 1031 provided for engagement with a groove hole 1150 in the upper corner casting 1100a; and a lower cone 1041 provided for engagement with a groove hole 1150 in the lower corner casting 1100a. The lower cone 1041 includes a fixed protrusion 1042 and a movable protrusion (latch) 1043 which is on the opposite side to the fixed protrusion 1042. The movable protrusion 1043 is inserted into the groove hole of the corner casting automatically by an elastic force of an elastic member. Also, the movable protrusion 1043 is supported pivotably around a shaft 1044 which is provided in the fixed protrusion 1042.

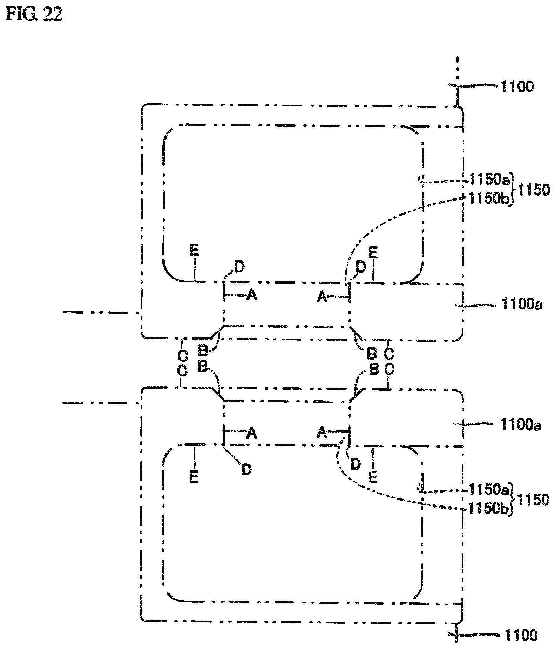

As shown also in Fig. 22, the groove hole 1150 of the corner casting 1100a has a hollow 1150a which is formed as an inner space defined by surrounding walls of the corner casting 1100a, and an aperture portion 1150b which is formed in the surrounding wall, communicates with the hollow 1150a, is like a long hole and smaller than the hollow 1150a. The aperture portion 1150b has an aperture vertical surface region A which is provided by a wall thickness of the surrounding wall; an entrance corner region B (tapered region) which is located at an entrance of the aperture vertical surface region A; an outer surface region C which is perpendicular to the aperture vertical surface region A and leads to the entrance corner region B; a far corner region D which is located on a far end of the aperture vertical surface region A; an inner surface region E which is perpendicular to the aperture vertical surface region A and leads to the far corner region D; etc.
Further related background art is disclosed in DE 10 2009 035201 A1, WO 2007/142531 A2, US 6 490 766 B1 and US 2003/034654 A1.

### SUMMARY OF INVENTION

### TECHNICAL PROBLEM

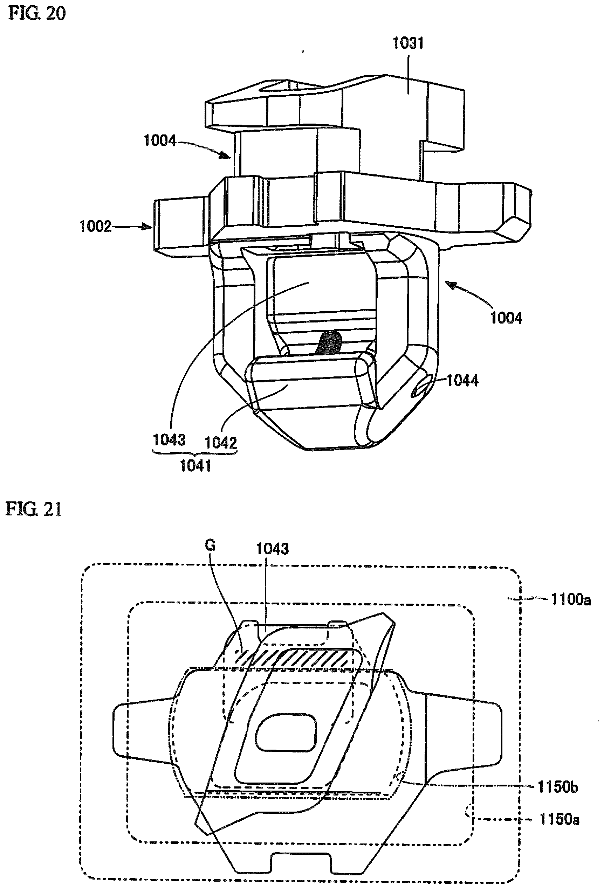

The conventional container securing device has an open space at a center of the lower support pillar 1004, with posts separated on two sides of this open space. In this arrangement, the movable protrusion 1043 is in the open space, and is pivotably supported by the shaft 1044. In other words, the movable protrusion 1043 is located at the center of the lower support pillar 1004. This causes, as indicated by a hatched region G in Fig. 21, the movable protrusion 1043 to make contact with the far corner region D or the inner surface region E of the corner casting 1100a, near the longitudinal center region of the aperture portion 1150b which has a long-hole shape, resulting in a large load applied to the longitudinal center region of the aperture portion 1150b.

This can cause a convex deformation at an edge near the longitudinal center region of the aperture portion 1150b, resulting in a failure of the corner casting 1100a (reduced strength of the corner fitting).

Also, there is known a type of container securing device in which its lower cone does not have a movable protrusion but only has a fixed protrusion which is like the fixed protrusion 1042. Container securing devices of this type also have the same problem that a convex deformation is likely to develop at an edge near a longitudinal center region of the aperture portion 1150b, resulting in a failure of the corner casting 1100a.

The present invention was made in consideration into the above-described circumstances, with an object to provide a container securing device capable of reducing deformation of the aperture portion in the corner casting.

### SOLUTION TO PROBLEM

In order to solve the problem described above, the present invention provides an arrangement as defined in claims 1 and 6.

According to the present invention, the fitting portion is provided with a contact portion which does not make contact with a longitudinal center region of the long-hole shaped aperture portion but makes contact with each longitudinal end region thereof. Because of this, the load tends to come more onto near the end of the aperture portion. Therefore, it is possible to reduce deformation of the aperture portion becoming convex at its center region, and thus to prevent failure of the corner casting.

According to the invention as defined in claim 1, the fitting portion has a movable protrusion which is urged to protrude laterally from a vertical surface of the support pillar, and the movable protrusion has the contact portion.

The movable protrusion may have a shaft portion, and the shaft portion has two sides each provided with the contact portion.

The shaft portion may be attachable to/detachable from a shaft supporting concave formed in the support pillar.

Alternatively, the movable protrusion may be supported by a shaft member inserted through a shaft supporting hole formed in the support pillar.

The movable protrusion may have a platy portion which connects the contact portions with each other.

According to the invention as defined in claim 6, the fitting portion has a fixed protrusion which protrudes laterally from the vertical surface of the support pillar, and the contact portion is provided in this fixed protrusion.

The contact portion may be provided by a groove or a concave formed in a center region of the fixed protrusion.

### ADVANTAGEOUS EFFECTS OF INVENTION

The present invention is capable of reducing deformation of the aperture portion becoming convex at its center region, and thus the invention offers an advantage of preventing failure of the corner casting.

### BRIEF DESCRIPTION OF DRAWINGS

Fig. 1 is a simplified explanatory drawing which shows a container securing device according to an embodiment of the present invention, a corner casting on a lower surface of an upper container in a stack, and another corner casting on an upper surface of a lower container in the stack.
Fig. 2 is an explanatory schematic drawing which shows an upper support pillar, an upper fitting portion and a pushing member of the container securing device in Fig. 1.
Fig. 3 is an explanatory drawing for describing how the upper fitting portion of the container securing device in Fig. 1 is attached to a groove hole of a corner casting.
Fig. 4 is an explanatory view for describing how the upper fitting portion of the container securing device in Fig. 1 is attached to the groove hole of the corner casting.
Fig. 5 is a six-view drawing of the container securing device in Fig. 1. A bottom view includes a hatched region indicating a contact region between an aperture portion of the corner casting and a movable protrusion.
Fig. 6 is a six-view drawing of the movable protrusion of the container securing device in Fig. 1.
Fig. 7 is a four-view drawing (without a plan view and a bottom view) of the container securing device in Fig. 1 with the movable protrusion unillustrated.
Fig. 8A is a perspective view of the container securing device in Fig. 1.
Fig. 8B is a perspective view of the container securing device in Fig. 1, with the movable protrusion shown detached therefrom.
Fig. 9 is a sectional view of the container securing device in Fig. 1.
Fig. 10 is a sectional view of a container securing device as another embodiment.
Fig. 11 is an explanatory drawing which shows how the lower support pillar and the lower fitting portion of the container securing device in Fig. 1 are detached from a corner casting on a lower surface.
Fig. 12 is an explanatory drawing which shows how the lower support pillar and the lower fitting portion of the container securing device in Fig. 1 are detached from a corner casting on a lower surface.
Fig. 13 is an explanatory drawing which shows how the lower support pillar and the lower fitting portion of the container securing device in Fig. 1 are detached from a corner casting on a lower surface.
Fig. 14 is an explanatory drawing which shows how the lower support pillar and the lower fitting portion of the container securing device in Fig. 1 are detached from a corner casting on a lower surface.
Fig. 15A is a simplified schematic side view which shows a container securing device as another embodiment of the present invention.
Fig. 15B is an explanatory drawing of a fixed protrusion of the container securing device in Fig. 15A.
Fig. 16 is a perspective view of a container securing device as another embodiment.
Fig. 17 is a perspective view of the container securing device in Fig. 16, with a movable protrusion shown detached therefrom.
Fig. 18 is a sectional view of the container securing device in Fig. 16.
Fig. 19 is an explanatory drawing which shows how a conventional container securing device is engaged with corner castings of an upper and a lower containers.
Fig. 20 is an explanatory drawing which shows a conventional container securing device.
Fig. 21 is an explanatory drawing which shows a contact region between a aperture portion of a corner casting and a movable protrusion of the conventional container securing device by means of hatching.
Fig. 22 is an explanatory drawing which shows corner castings of an upper and a lower containers.

### DESCRIPTION OF EMBODIMENTS

Hereinafter, embodiments of the present invention will be described with reference to the attached drawings.

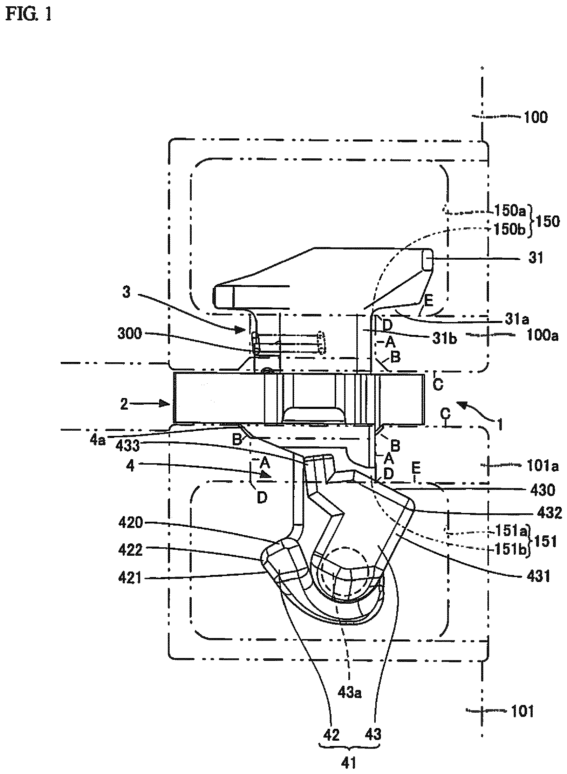

As shown in Fig. 1, an upper container 100 has a corner casting 100a at corners of its lower surface, whereas a lower container 101 has a corner casting 101a at corners of its upper surface. A container securing device 1 is between the corner casting 100a and the corner casting 101a, and fixes the upper container 100 and the lower container 101 with each other.

The corner casting 100a is formed with a groove hole 150, which has a hollow 150a formed as an inner space defined by surrounding walls of the corner casting 100a, and an aperture portion 150b which is formed in the surrounding walls, communicates with the hollow 150a, and is provided by a long hole smaller than the hollow 150a. The aperture portion 150b has an aperture vertical surface region A which is provided by a wall thickness of the surrounding wall; an entrance corner region B (tapered region) which is located at an entrance of the aperture vertical surface region A; an outer surface region C which is perpendicular to the aperture vertical surface region A and leads to the entrance corner region B; a far corner region D which is located on a far end of the aperture vertical surface region A; an inner surface region E which is perpendicular to the aperture vertical surface region A and leads to the far corner region D; etc.

Likewise, the corner casting 101a is formed with a groove hole 151, which has a hollow 151a formed as an inner space defined by surrounding walls of the corner casting 101a, and an aperture portion 151b which is formed in the surrounding walls, communicates with the hollow 151a, and is like a long hole smaller than the hollow 151a. The aperture portion 151b has an aperture vertical surface region A which is provided by a wall thickness of the surrounding wall; an entrance corner region B (groove-hole-side tapered region) which is located at an entrance of the aperture vertical surface region A; an outer surface region C which is perpendicular to the aperture vertical surface region A and leads to the entrance corner region B; a far corner region D which is located on a far end of the aperture vertical surface region A; an inner surface region E which is perpendicular to the aperture vertical surface region A and leads to the far corner region D; etc.

The container securing device 1 has a flange 2. The flange 2 comes on an outer side of the groove holes 150, 151 of the corner casting 100a, 101a. The flange 2 has an upper support pillar (second support pillar) 3 on its upper surface, and a lower support pillar (support pillar) 4 on its lower surface. When the container securing device 1 is in a locked state, the flange 2 is in contact with the outer surface region C of the corner casting 100a, 101a. The lower support pillar (support pillar) 4 is formed, at its border region from the flange 2, with a support-pillar-side tapered region 4a which is sloped along a slope in the entrance corner region B (groove-hole-side tapered region) and is in contact with the entrance corner region B.

The upper support pillar 3 is provided, on its upper side, with an upper cone (second fitting portion) 31. The upper support pillar 3 fits into the aperture portion 150b, whereas the upper cone 31 fits into the hollow 150a. The lower support pillar 4 is provided, on its lower side, with a lower cone (fitting portion) 41. The lower support pillar 4 fits into the aperture portion 151b, whereas the lower cone 41 fits into the hollow 151a.

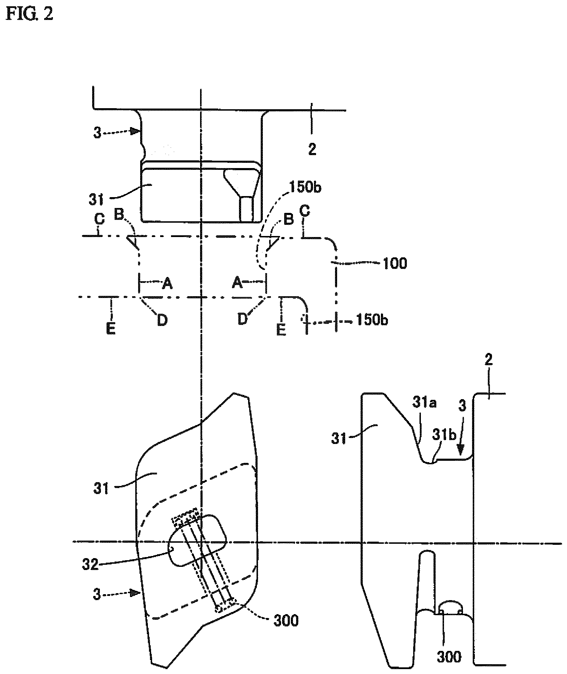

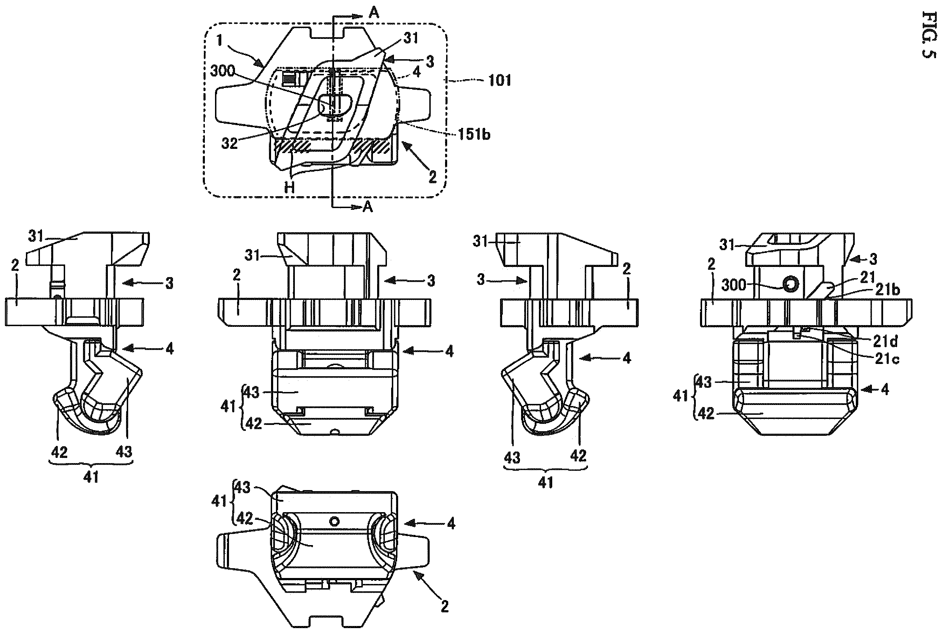

As shown in Fig. 2, the upper support pillar 3 has a cross section similar to a parallelogram, and it is possible to rotate this upper support pillar 3 within the hollow 150a of the groove hole 150 in the corner casting 100a. The flange 2 is provided with a fixing lever 21, as shown also in Fig. 5, which is operated to protrude its upper portion into the aperture portion 150b of the groove hole 150, so that the upper cone 31 is fixed in the groove hole 150.

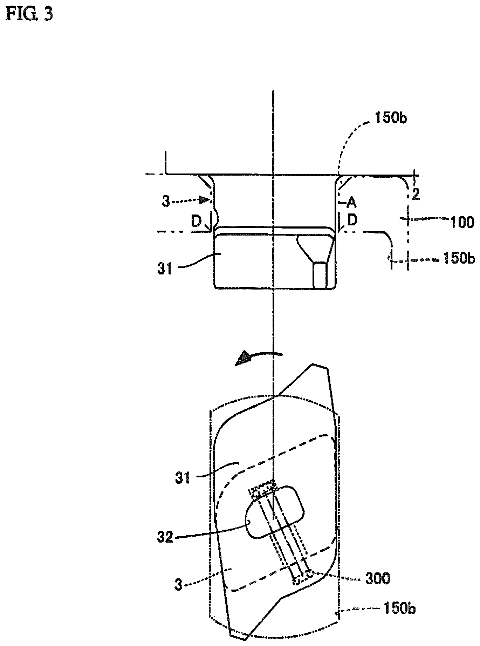

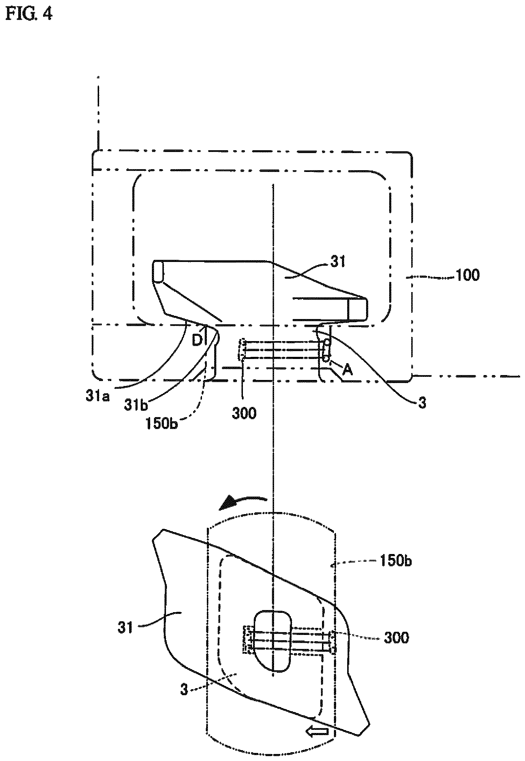

When the upper cone 31 is inserted into the groove hole 150, as shown in Fig. 3, a long side of the upper cone 31 is aligned with a long side of the aperture portion 150b, and the container securing device 1 is tilted to insert the upper cone 31 through the aperture portion 150b into the hollow 150a. Then, as shown in Fig. 4, the container securing device 1 is rotated by approximately 90 degrees within a horizontal plane. The rotation brings the long side of the upper cone 31 across the long side of the aperture portion 150b which is like a long hole.

As shown in Fig. 5 and others, the fixing lever 21 is pivotably supported by an unillustrated horizontal shaft, and its upper portion is protruded out of the upper surface of the flange 2 by an elastic force of a spring 21b. The fixing lever 21 has its lower portion 21c extending out of the lower surface of the flange 2. By operating the lower portion 21c, it is possible to retract the upper portion of the fixing lever 21 into the flange 2. It should be noted here that the pivotal movement of the fixing lever 21 is stopped when the lower portion 21c makes contact with a pin 21d which is provided on the lower surface of the flange 2.

As shown in Fig. 4 and others, the upper support pillar 3 has a pushing member 300 for pushing the aperture vertical surface region A which is part of the aperture portion 150b of the corner casting 100a. The pushing member 300 is provided, for example, by a coil spring and is inserted into a horizontal hole formed in a vertical surface of the upper support pillar 3. Under a natural state, the pushing member 300 is out of the vertical surface, makes contact with the aperture vertical surface region A and pushes the aperture vertical surface region A when the long side of the upper cone 31 is across the long side of the aperture portion 150b which is like a long hole.

The upper cone 31 is formed with a sloped region 31a to face the flange 2. The sloped region 31a is designed so that one of its ends can be within the hollow 150a while the other can be within the aperture portion 150b. The said other end has its border region from the upper support pillar 3, formed with a recess 31b so that the sloped region 31a is not prevented from contacting the far corner region D.

When the container securing device 1 is rotated by approximately 90 degrees within a horizontal plane as has been described earlier, the pushing member 300 comes in contact with the aperture vertical surface region A to push the aperture vertical surface region A. The push causes the sloped region 31a to be pressed away from the aperture vertical surface region A, onto the far corner region D on the opposite side.

As shown in Fig. 2, there is a vertical hole 32 formed in the upper support pillar 3 and the upper cone 31, and the vertical hole 32 is formed, in its inner wall, with a receptacle recess in which a base end portion of the pushing member 300 is held. The pushing member 300 is visible from the vertical hole 32. So, for example, a tool may be inserted from the vertical hole 32 to crimp part of the pushing member 300 to prevent the pushing member 300 from dropping. Also, for example, the pushing member 300 may be provided with a contact member at its tip to make contact with the aperture vertical surface region A, rather than the pushing member 300 itself to make contact with the aperture vertical surface region A.

As shown in Fig. 1, the lower support pillar 4 is formed with vertical surfaces in parallel to the long sides of the aperture portion 151b. The lower cone 41 has, like in the container securing device disclosed in Patent Literature 1 (JP-B 4781786 Gazette), a fixed protrusion 42 protruding from one of the vertical surfaces, and a movable protrusion (latch) 43 protruding from the other of the vertical surfaces. The fixed protrusion 42 has its most protruding portion, the movable protrusion 43 has its most protruding portion, and these two portions are not at the same height; more specifically, the one in the movable protrusion 43 is closer to the flange 2 (at a higher position) than the one in the fixed protrusion 42.

The fixed protrusion 42 has a first sloped surface 420, a second sloped surface 421 and a convex peak 422 between these sloped surfaces. The first sloped surface 420 makes contact with the far corner region D located on the far end of the aperture portion 151b when the container is lifted for unloading. The second sloped surface 421 makes contact with the entrance corner region B located on the entrance side of the aperture vertical surface region A when the container is lowered for locking/lifted for unloading. The first sloped surface 420 and the second sloped surface 421 are straight slopes but this is not limiting; the slopes may be curved or composed of two or more flats. The convex peak 422 comes in contact with the aperture vertical surface region A when the container is lowered for locking/lifted for unloading.

The movable protrusion 43 has a first sloped surface 430, a second sloped surface 431 and a convex peak 432 between these sloped surfaces. The first sloped surface 430 makes contact with the far corner region D located on the far end of the aperture portion 151b when the container is lowered for locking/lifted for unloading. The second sloped surface 431 makes contact with the entrance corner region B located on the entrance side of the aperture vertical surface region A when the container is lowered for lockingllifted for unloading. The first sloped surface 430 and the second sloped surface 431 have straight slope but this is not limiting; the slopes may be curved or composed of two or more flats. Also, the first sloped surface 430 may be roughened with minute peaks and bottoms for example, for decreased slip when the first sloped surface 430 and the far corner region D comes in contact with each other. The convex peak 432 comes in contact with the aperture vertical surface region A when the container is lowered for locking/lifted for unloading. It should be noted here that the movable protrusion 43 is formed with a pivot stopper portion 433. The pivot stopper portion 433 prevents the movable protrusion 43 from pivoting (protruding) beyond the predetermined amount.

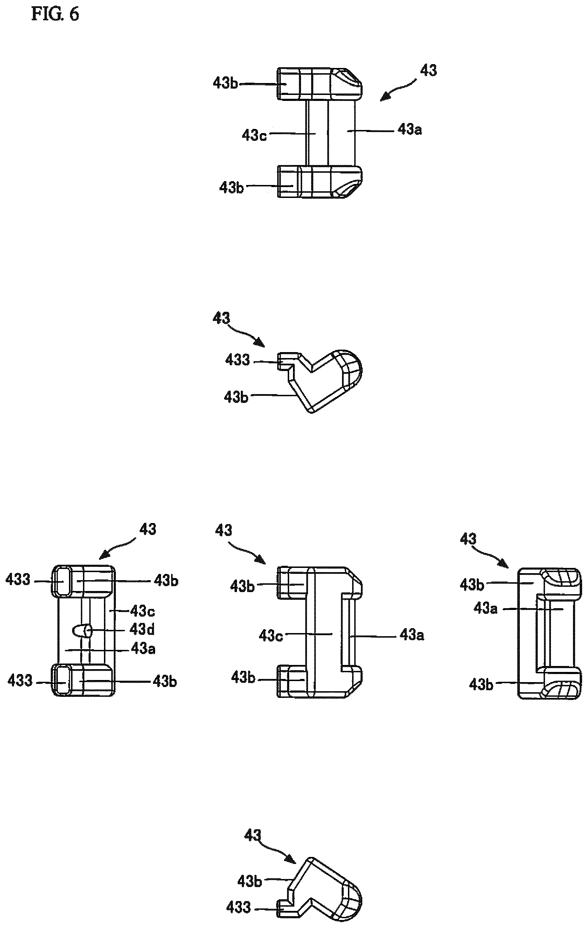

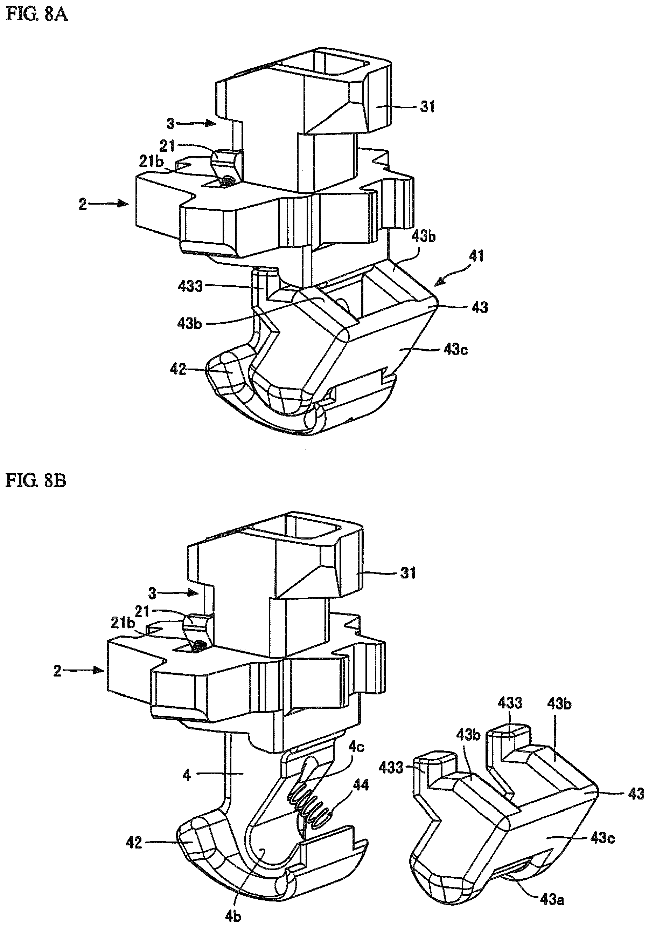

As shown in Fig. 6, Fig. 8A and Fig. 8B, the movable protrusion 43 includes: a horizontal shaft (shaft portion) 43a; contact portions 43b provided on two sides of the horizontal shaft 43a; and a platy portion 43c provided to connect these contact portions 43b with each other. The first sloped surface 430 in the contact portions 43b does not make contact with a longitudinal center region but with a longitudinal end region of the long-hole-shaped aperture portion 151b. The platy portion 43c is formed with a hole 43d for housing part of a coil spring 44. The horizontal shaft 43a may be formed with the platy portion 43c continuously therewith. The movable protrusion 43 may be formed as a single piece by means of, e.g., casting. The platy portion 43c increases rigidity of the movable protrusion 43.

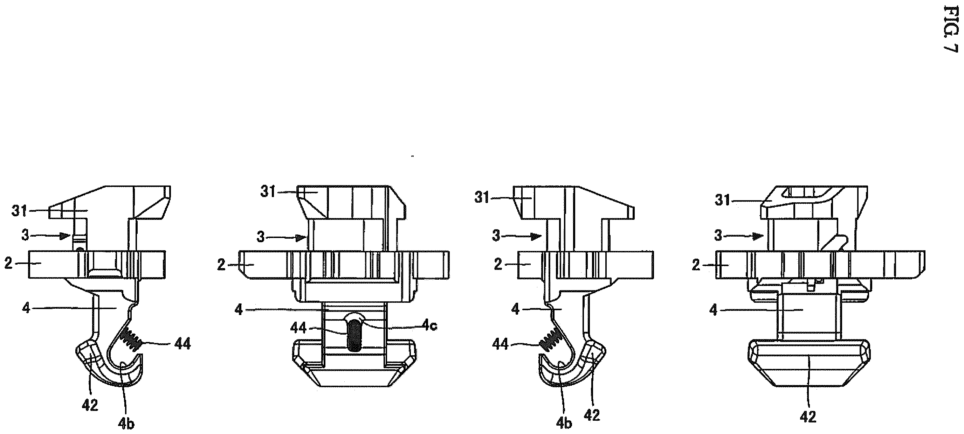

As shown in Fig. 7, the lower support pillar 4 is formed with a shaft supporting concave 4b to support the horizontal shaft 43a of the movable protrusion 43. The shaft supporting concave 4b has a substantially semicircular section, to allow the horizontal shaft 43a to be attached to/detached from a direction across the axis of the horizontal shaft 43a. Also, the lower support pillar 4 is formed with a hole 4c for housing the other end of the coil spring 44. With these, the two contact portions 43b are positioned at two ends of the horizontal shaft 43a, so as to sandwich the lower support pillar 4.

The movable protrusion 43 is pivoted by an elastic force of the coil spring 44, and protrudes in a lateral direction from a vertical surface of the lower support pillar 4. When the container is lowered for locking/lifted for unloading, the movable protrusion 43 is pivoted against the elastic force of the coil spring 44, and temporarily retracted toward the lower support pillar 4 side. In other words, the movable protrusion 43 makes a state in which it protrudes laterally out of the vertical surface of the lower support pillar 4, and a state in which it is retracted toward the lower support pillar 4 side.

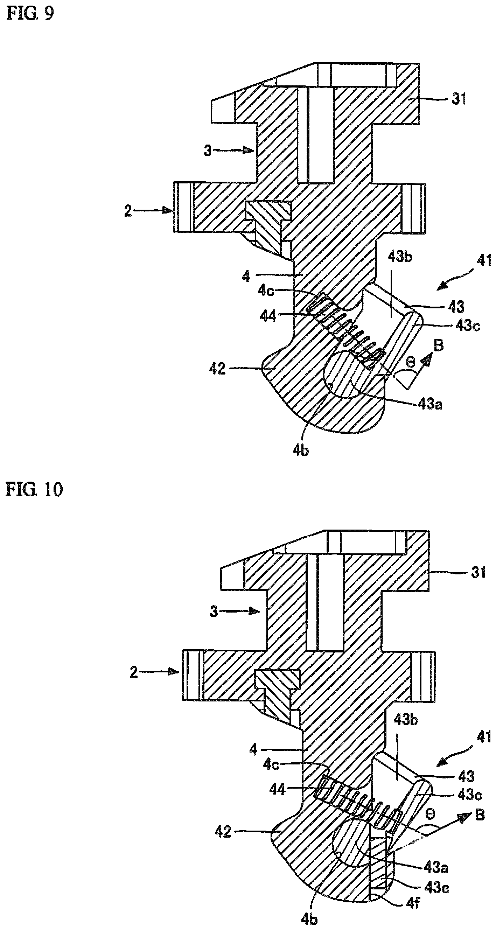

Fig. 9 is a simplified sectional view taken in a line A-A in the bottom view of Fig. 5, with the corner casting 101a unillustrated. As understood also from Fig. 9, the coil spring 44 urges the movable protrusion 43 (in the axial direction of the coil) at an angle θ which is smaller than 90 degrees with respect to a direction in which the movable protrusion 43 is attached/detached. Such an angle as the above prevents the movable protrusion 43 from dropping. It should be noted here that in the embodiment shown in Fig. 9, part of an intermediate region in the horizontal shaft 43a is engraved for housing the coil spring 44. The coil spring 44 may be placed after the movable protrusion 43 is attached, or the coil spring 44 may be placed first and then the movable protrusion 43 may be attached while compressing the coil spring 44 with a jig.

As shown in Fig. 10, on the other hand, it is also possible to arrange that the coil spring 44 urges the movable protrusion 43 (in the axial direction of the coil) at an angle θ which is greater than 90 degrees with respect to the direction in which the movable protrusion 43 is attached/detached. In this case, a spring pin 43e, for example, may be used to prevent the movable protrusion 43 from dropping. The spring pin 43e has its axis across the attaching/detaching direction of the movable protrusion 43. Also, the movable protrusion 43 has part of its intermediate region removed to allow for the pivotal movement. Alternatively, the spring pin 43e may be press-fit from a hole 4f formed in the lower cone 41; and still another way may be that in place of such a hole as the hole 4f, a bottomed hole is formed in the shaft supporting concave 4b, so that the movable protrusion 43 is allowed to protrude and then a pin or the like (a spring pin or a ball-shaped part may also do) is inserted into the hole from above as in Fig. 10. Above the pin or the like, will be the coil spring 44.

Referring to Fig. 1, as the flange 2 comes in contact with the outer surface region C (upper surface) of the corner casting 101a, the lower cone 41 enters the groove hole 151, and the movable protrusion 43 is protruded laterally out of the vertical surface of the lower support pillar 4, the locked state is completed. In the locked state, the movable protrusion 43 is under an urge from the coil spring 44 to pivot in a clockwise direction as in Fig. 1, whereas the first sloped surface 430 makes contact with the far corner region D which is located on the far end of the aperture portion 151b, and this state of contact is maintained. The horizontal shaft 43a is not right below the far corner region D, but on a lefter side (closer to the center of the aperture portion 151b) as in Fig. 1. Also in the locked state where the first sloped surface 430 is in contact with the far corner region D, the first sloped surface 430 is inclined with one end of the first sloped surface 430 being inside the hollow 151a and the other end of the first sloped surface 430 being inside the aperture portion 151b.

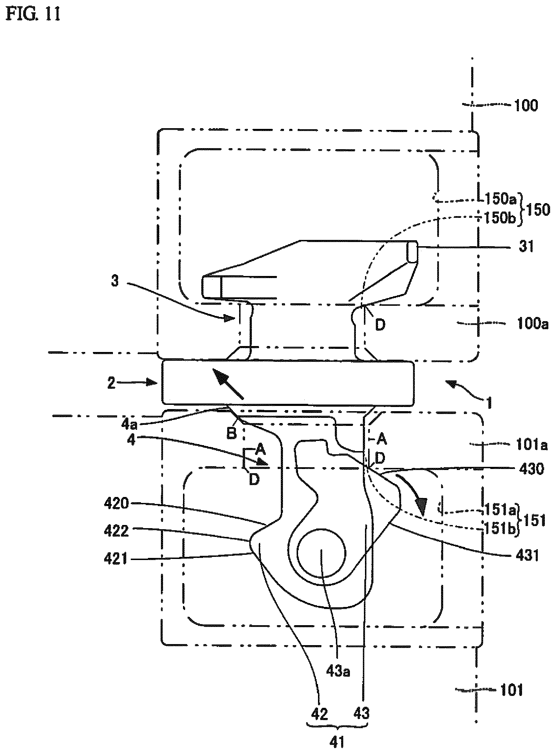

At the time of unloading when the container is pulled out from the locked state shown in Fig. 1, the container securing device 1 is lifted as shown in Fig. 11, not straightly upward but obliquely (leftward and upward in Fig. 11) along the slope of the entrance corner region B located on the side where there is the fixed protrusion 42. In this process, the movable protrusion 43 can pivot further in the clockwise direction under the urge from the coil spring 44. In other words, the movable protrusion 43 is allowed to pivot further, whereby the container securing device 1 is lifted obliquely upward along the slope of the entrance corner region B.

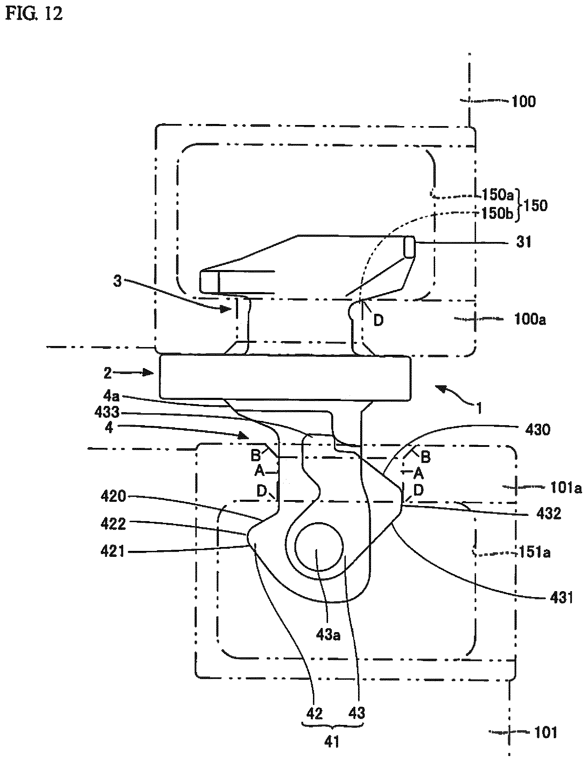

As the movable protrusion 43 pivots further, as shown in Fig. 12, the movable protrusion 43 is then prevented from pivoting furthermore by the pivot stopper portion 433. Under this state where pivotal movement is prevented, there is provided a predetermined clearance because a length (width) from the tip of the convex peak 432 to the other vertical surface of the lower support pillar 4 which is located behind the peak is slightly shorter than a width of the aperture portion 151b in its short-side direction. It should be noted here that there may be an arrangement in which such a clearance as described is not provided, and the movable protrusion 43 makes contact with the aperture vertical surface region A when the lower cone 41 passes through the aperture portion 151b.

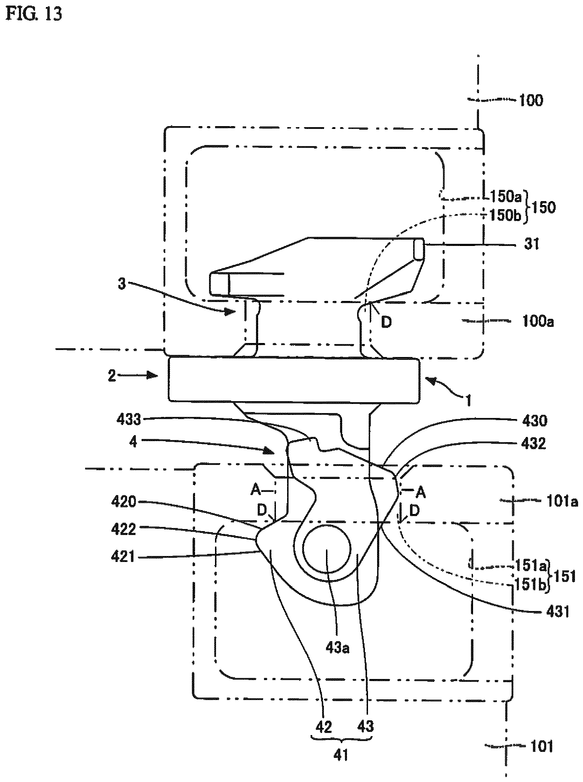

As the container securing device 1 is lifted further, as shown in Fig. 13, the first sloped surface 420 of the fixed protrusion 42 makes contact with the far corner region D, and therefore the device is lifted along the slope in the first sloped surface 420, obliquely upward (rightward and upward in Fig. 13). Also, due to this movement, the movable protrusion 43 pivots counterclockwise.

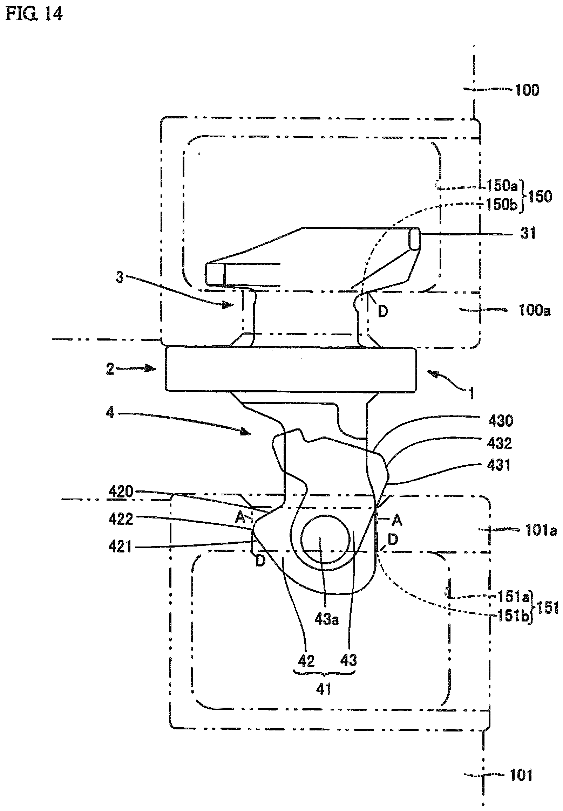

As the container securing device 1 is lifted further, as shown in Fig. 14, the convex peak 422 moves while being in contact with the aperture vertical surface region A. There is provided a predetermined clearance because a length (width) from the tip of the convex peak 422 to the other vertical surface of the lower cone 41 which is located behind the convex peak 422 is slightly shorter than the width of the aperture portion 151b in its short-side direction.

According to the arrangement as described, the contact portions 43b provided at two ends of the horizontal shaft 43a of the movable protrusion 43 are located on two sides of the support pillar 4 to flank the support pillar 4; this allows the two contact portions 43b to make contact not onto a center area of the aperture portion 151b of the corner casting 101a but onto areas near the end of the aperture portion 151b as indicated by a hatched region H in the bottom view of Fig. 5. With this arrangement, the load tends to come more onto near the end of the aperture portion 151b, and therefore it becomes possible to reduce deformation of the aperture portion 151b becoming convex at its center region, and thus to prevent failure of the corner casting 101a

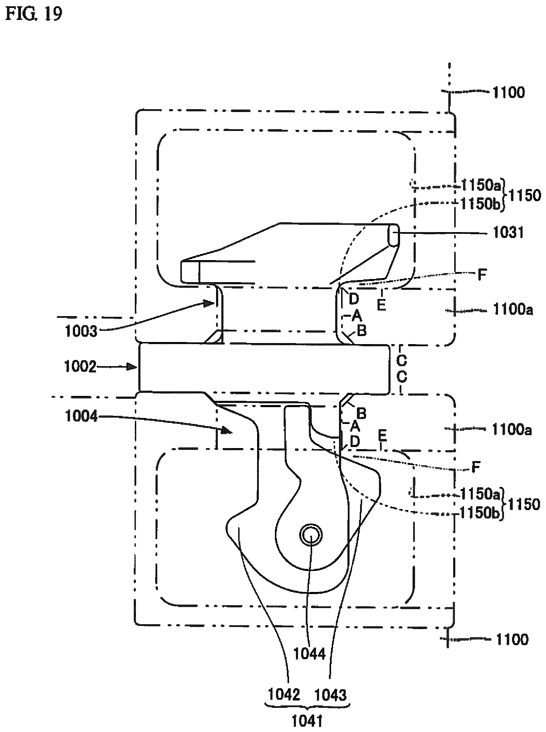

Returning to Fig. 19, when the container securing device disclosed in the Patent Literature 1 is in its locked state where the upper cone 1031 is fitted into the groove hole 1150 of the corner casting 11 00a, there is a gap (play) F from the upper cone 1031 to the far corner region D, and to the inner surface region E. Also, in its locked state where the lower cone 1041 is fitted into the groove hole 1150 of the corner casting 1100a, there is a gap F from the movable protrusion 1043 to the far corner region D, and to the inner surface region E.

When the containers 1100 are stacked on a ship, the containers 1100 tilt as the ship rolls. If the gap F is zero in this situation, the tilt of the container 1100 is generally the same as the tilt of the ship. However, if there is the gap F at each of the fixing location in the upper and the lower containers 1100, 1100, the tilt caused by the gap F accumulates in the containers at higher levels, and it is not possible to prevent those containers 1100 at higher levels from tilting more than the ship. In other words, the above-described conventional container securing device has a problem that the gap F makes it difficult to stack a large number of containers, leading to a high cost in transporting containers.

The container securing device 1, however, is capable of decreasing the gap between the movable protrusion 43 and the groove hole 151 because the locked state is achieved when the flange 2 comes in contact with the outer surface region C of the corner casting 101a, and the movable protrusion 43 comes in contact with the far corner region D at the far end of the aperture portion 151b at some point when the movable protrusion 43 pivots. The arrangement makes it possible to stack a large number of containers, and offers such an advantage that transportation cost of the containers is reduced. In the locked state, the movable protrusion 43 is during its pivoting process, and therefore as the container securing device 1 is detached from the corner casting 101a, the movable protrusion 43 can pivot further while making contact with the far corner region D. The pivoting movement of the movable protrusion 43 during the detachment allows the corner casting 101a and the container securing device 1 to separate from each other in mutually oblique directions, whereby it is possible to provide an initial step for the lower support pillar 4 and the movable protrusion 43 to pass through the aperture portion 151b. In other words, an operation to lift the container causes automatic detachment of the container securing device 1 from the corner casting 101a.

The support-pillar-side tapered region 4a helps smoothen the detachment since the support-pillar-side tapered region 4a is guided in the oblique direction along the slope of the entrance corner region B which is on the side closer to the fixed protruding 42 when the container securing device 1 is detached from the corner casting 101a.

Also, the arrangement in which the sloped region 31a is pressed onto the far corner region D of the corner casting makes it possible to stack a large number of containers because the arrangement reduces the gap between the upper fitting portion (the second fitting portion) 31 and the groove hole 151, offering such an advantage that transportation cost of the containers is reduced.

Of course, the container securing device according to the present invention is not limited to the structure capable of reducing development of the gap F as described above: Namely, the container securing device may have a structure which allows development of the gap F as described above, with the arrangement that the movable protrusion 43 has the contact portions 43b. Further, the container securing device according to the present invention is not limited to those for fixing containers which are stacked in the up-down direction, but may be modified for fixing containers onto a cargo bed of a trailer and/or a railroad freighter. For example, the flange 2 may be bolted or otherwise fixed onto the cargo bed.

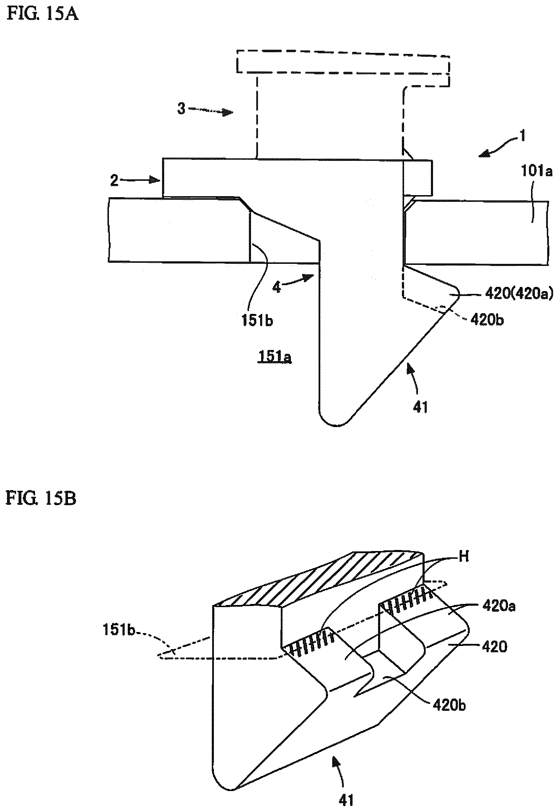

Also, the container securing device according to the present invention may be as shown in Fig. 15A and Fig. 15B, i.e., including a support pillar 4 for fitting into the aperture portion 151b; and a lower cone (fitting portion) 41 for fitting into the hollow 151a of the groove hole 151, with the lower cone 41 not having a movable protrusion 43 but having a fixed protrusion 420 only. In a locked state where the fixed protrusion 420 is fitted into the hollow 151a, the fixed protrusion 420 is below a longitudinal edge of the aperture portion 151b. With such a structure as the above, it is also possible to provide contact portions 420a at two ends of the fixed protrusion 420, for contact with an edge of the aperture portion 151b of the corner casting 101a. With such a structure as the above, it is possible, as indicated by a hatched region H in Fig. 15B, to make the two contact portions 420a come into contact not on a center region of the aperture portion 151b in the corner casting 101a but on the end regions. With this arrangement, the load tends to come more onto near the end of the aperture portion 151b, and therefore it becomes possible to reduce deformation of the aperture portion 151b becoming convex at its center region, and thus to prevent failure of the corner casting 101a.

In the embodiment described above, the contact portions 420a are defined by forming a groove 420b at a center region in an upper surface of the fixed protrusion 420, starting from a side closer to the support pillar 4 toward a tip of the fixed protrusion 420. However, this is not limiting. With a basic understanding that a region in the upper surface of the fixed protrusion 420 which makes contact with an edge of the aperture portion 151b is a side close to an upright surface of the support pillar 4, the contact portions 420a may be provided by forming a concave portion on the side of the upright surface of the support pillar 4. The lower cone (fitting portion) 41 may be modified for easier entry into the aperture portion 151b by giving the lower cone 41 a pointed tip.

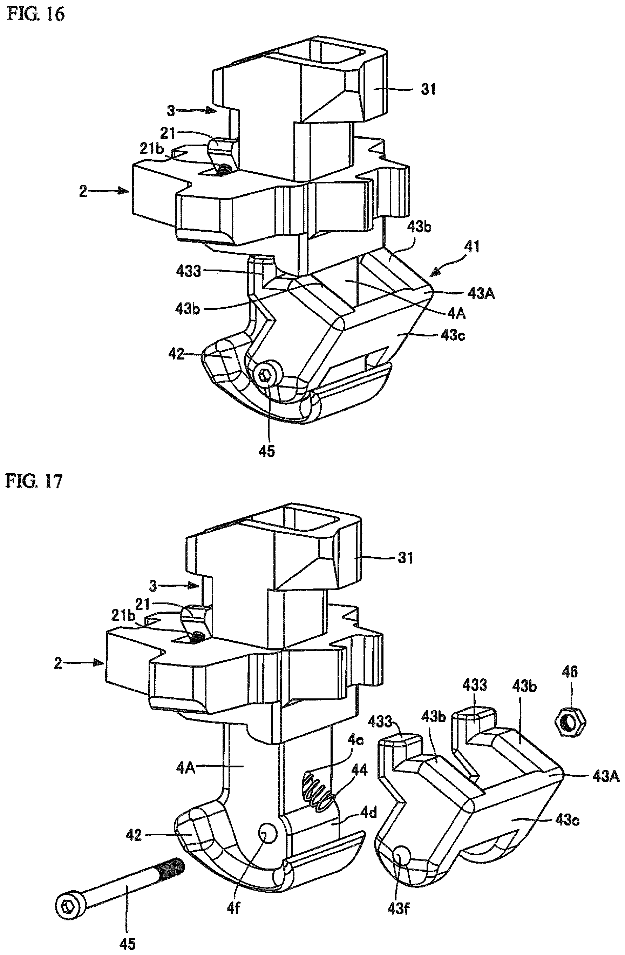

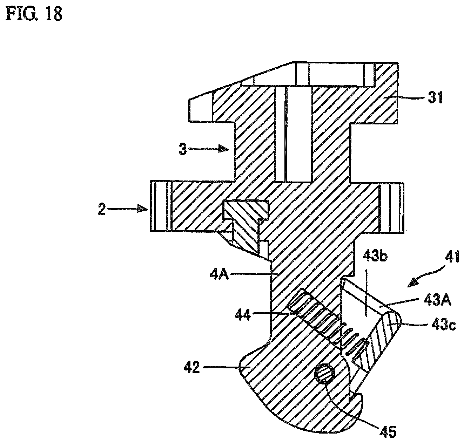

In the embodiment described earlier, the movable protrusion 43 has a horizontal shaft (shaft portion) 43a, and this horizontal shaft 43a is detachable from/attachable to the shaft supporting concave 4b formed on the lower support pillar (support pillar) 4. However, the invention is not limited to such a structure. For example, as shown in Fig. 16, Fig. 17 and Fig. 18, there may be a structure in which a movable protrusion 43A is supported by a long bolt 45 which serves as a shaft member provided in the lower support pillar (support pillar) 4A.

In such a structure as this, for example, the lower support pillar 4A is formed with a shaft supporting portion 4d, and the shaft supporting portion 4d is formed with a shaft supporting hole 4f in the horizontal direction. Also, the movable protrusion 43A is formed with shaft supporting holes 43f in the horizontal direction. The shaft supporting portion 4d has a smaller width than a gap between the contact portions 43b in the movable protrusion 43A; therefore it is possible to position the shaft supporting portion 4d between the contact portions 43b and fit the movable protrusion 43A into the lower support pillar 4A. Once fitted, then, the long bolt 45 is inserted through the shaft supporting holes 43f and the shaft supporting hole 4f from the side, and a nut 46 is threaded onto a tip of the long bolt 45, whereby it is possible to support the movable protrusion 43A pivotably in the lower support pillar 4A.

It should be noted here that a counterbore may be formed around each shaft supporting hole 43f on the outer side so that the head of the long bolt 45 and the nut 46 stay in the respective couterbores. The shaft member is not limited to the long bolt 45; spring pins may be used. In this case, the shaft supporting holes 43f and the shaft supporting hole 4f are different in diameter size, and the spring pin is loosely fitted through the shaft supporting hole 43f for example, and is press-fitted into the shaft supporting hole 4f. Conversely, the spring pin may be press-fitted into the shaft supporting holes 43f and is loosely fitted through the shaft supporting hole 4f.

### [REFERENCE SIGNS LIST]

- 1: Container Securing Device
- 2: Flange
- 3: Upper Support Pillar (Second Support Pillar)
- 31: Upper Cone (Second Fitting Portion)
- 31a: Sloped Region
- 4: Lower Support Pillar (Support Pillar)
- 4A: Lower Support Pillar (Support Pillar)
- 4a: Support-Pillar-Side Tapered Region
- 4b: Shaft Supporting Concave
- 4d: Shaft Supporting Portion
- 4f: Shaft Supporting Hole
- 41: Lower Cone (Fitting Portion)
- 42: Fixed Protrusion
- 420: Fixed Protrusion
- 420a: Contact Portion
- 420b: Groove
- 43: Movable Protrusion
- 43A: Movable Protrusion
- 43a: Horizontal Shaft (Shaft Portion)
- 43b: Contact Portion
- 43c: Platy Portion
- 43f: Shaft Supporting Hole
- 44: Coil Spring
- 45: Long Bolt (Shaft Member)
- 46: Nut
- 100, 101: Containers
- 100a, 101a: Corner Castings
- 150, 151: Groove Holes
- 150a, 151a: Hollows
- 150b, 151b: Aperture portions
- 300: Pushing Member
- A: Aperture Vertical Surface
- B: Entrance Corner Region (Groove-Hole-Side Tapered Region)
- C: Outer Surface Region
- D: Far Corner Region

## Claims

1. An arrangement comprising a container securing device (1) and a groove hole (150, 151) of a corner casting (100a, 101a) of a container, the container securing device (1) comprising: a flange (2) to be located on an outer side of the groove hole (150, 151) ; a support pillar (4, 4A) provided on the flange (2) to fit in a long-hole shaped aperture portion (150b, 151b) of the groove hole (150, 151); and a fitting portion (41) provided on the support pillar (4, 4A) to fit in a hollow (150a, 151a) of the groove hole (150, 151); **characterised in that** the fitting portion (41) has a contact portion (43b) which does not make contact with a longitudinal center region of the long-hole shaped aperture portion (150b, 151b) but makes contact with two longitudinal end regions thereof;
wherein the fitting portion (41) has a movable protrusion (43) which is urged to protrude laterally from a vertical surface of the support pillar (4, 4A), and the movable protrusion (43) has the contact portion (43b).

2. The arrangement according to Claim 1, wherein the movable protrusion (43) has a shaft portion (43a), and the shaft portion (43a) has two sides each provided with the contact portion (43b).

3. The arrangement according to Claim 2, wherein the shaft portion (43a) is attachable to/detachable from a shaft supporting concave (4b) formed in the support pillar (4, 4A).

4. The arrangement according to Claim 1, wherein the movable protrusion (43) is supported by a shaft member (45) inserted through a shaft supporting hole (43f) formed in the support pillar (4, 4A).

5. The arrangement according to one of the preceding claims, wherein the movable protrusion (43) has a platy portion (43c) connecting the contact portions (43b) with each other.

6. An arrangement comprising a container securing device (1) and a groove hole (150, 151) of a corner casting (100a, 101a) of a container, the container securing device (1) comprising: a flange (2) to be located on an outer side of the groove hole (150, 151); a support pillar (4, 4A) provided on the flange (2) to fit in a long-hole shaped aperture portion (150b, 151b) of the groove hole (150, 151); and a fitting portion (41) provided on the support pillar (4, 4A) to fit in a hollow (150a, 151a) of the groove hole (150, 151); **characterised in that** the fitting portion (41) has a contact portion (420a) which does not make contact with a longitudinal center region of the long-hole shaped aperture portion (150b, 151b) but makes contact with two longitudinal end regions thereof, wherein the fitting portion (41) has a fixed protrusion (42) which protrudes laterally from a vertical surface of the support pillar (4, 4A), and the fixed protrusion (42) has the contact portion (420a), wherein the fitting portion (41) is not provided with a movable protrusion (43).

7. The arrangement according to Claim 6, wherein the contact portion (420a) is provided by a groove (420b) or a concave formed in a center region of the fixed protrusion (42).

## Patentansprüche

1. Anordnung, umfassend eine Behälterbefestigungsvorrichtung (1) und ein Nutenloch (150, 151) eines Eckgussteils (100a, 101a) eines Behälters, wobei die Behälterbefestigungsvorrichtung (1) umfasst: einen Flansch (2), der an einer Außenseite des Nutenlochs (150, 151) anzuordnen ist; einen Stützpfeiler (4, 4A), der an dem Flansch (2) vorgesehen ist, um in einen langlochförmigen Öffnungsabschnitt (150b, 151b) des Nutenlochs (150, 151) zu passen; und einen Passabschnitt (41), der an dem Stützpfeiler (4, 4A) vorgesehen ist, um in einen Hohlraum (150a, 151a) des Nutenlochs (150, 151) zu passen;
**dadurch gekennzeichnet, dass** der Passabschnitt (41) einen Kontaktabschnitt (43b) aufweist, der nicht mit einem Längsmittelbereich des langlochförmigen Öffnungsabschnitts (150b, 151b) in Kontakt steht, sondern mit zwei Längsendbereichen davon in Kontakt steht;
wobei der Passabschnitt (41) einen beweglichen Vorsprung (43) aufweist, der dazu gedrängt wird, seitlich von einer vertikalen Oberfläche des Stützpfeilers (4, 4A) vorzustehen, und der bewegliche Vorsprung (43) den Kontaktabschnitt (43b) aufweist.

2. Anordnung nach Anspruch 1, bei der der bewegliche Vorsprung (43) einen Schaftabschnitt (43a) aufweist, und der Schaftabschnitt (43a) zwei Seiten hat, die jeweils mit dem Kontaktabschnitt (43b) versehen sind.

3. Anordnung nach Anspruch 2, bei der der Schaftabschnitt (43a) an einer in dem Stützpfeiler (4, 4A) ausgebildeten Schaftstützmulde (4b) anbringbar / von dieser lösbar ist.

4. Anordnung nach Anspruch 1, bei der der bewegliche Vorsprung (43) von einem Schaftelement (45) gehalten ist, das durch ein in dem Stützpfeiler (4, 4A) ausgebildetes Schaftstützloch (43f) eingesetzt ist.

5. Anordnung nach einem der vorhergehenden Ansprüche, bei der der bewegliche Vorsprung (43) einen plattenförmigen Abschnitt (43c) aufweist, der die Kontaktabschnitte (43b) miteinander verbindet.

6. Anordnung, umfassend eine Behälterbefestigungsvorrichtung (1) und ein Nutenloch (150, 151) eines Eckgussteils (100a, 101a) eines Behälters, wobei die Behälterbefestigungsvorrichtung (1) umfasst: einen Flansch (2), der an einer Außenseite des Nutenlochs (150, 151) anzuordnen ist; einen Stützpfeiler (4, 4A), der an dem Flansch (2) vorgesehen ist, um in einen langlochförmigen Öffnungsabschnitt (150b, 151b) des Nutenlochs (150, 151) zu passen; und einen Passabschnitt (41), der an dem Stützpfeiler (4, 4A) vorgesehen ist, um in einen Hohlraum (150a, 151a) des Nutenlochs (150, 151) zu passen;
**dadurch gekennzeichnet, dass** der Passabschnitt (41) einen Kontaktabschnitt (420a) aufweist, der nicht mit einem länglichen Mittelbereich des langlochförmigen Öffnungsabschnitts (150b, 151 b) in Kontakt steht, sondern mit zwei länglichen Endbereichen davon in Kontakt steht, wobei der Passabschnitt (41) einen festen Vorsprung (42) aufweist, der seitlich von einer vertikalen Oberfläche der Stützpfeiler (4, 4A) vorsteht, und der feste Vorsprung (42) den Kontaktabschnitt (420a) aufweist, wobei der Passabschnitt (41) nicht mit einem beweglichen Vorsprung (43) versehen ist.

7. Anordnung nach Anspruch 6, bei der der Kontaktabschnitt (420a) durch eine Nut (420b) oder eine Mulde vorgesehen ist, die in einem mittleren Bereich des festen Vorsprungs (42) ausgebildet ist.

## Revendications

1. Agencement comprenant un dispositif de fixation de récipient (1) et un orifice formant gorge (150, 151) d'une pièce de coin (100a, 101a) d'un récipient, le dispositif de fixation de récipient (1) comprenant : une bride (2) à localiser sur un côté externe de l'orifice formant gorge (150, 151) ; un montant de support (4, 4A) prévu sur la bride (2) pour être ajusté dans une partie d'ouverture en forme d'orifice long (150b, 151b) de l'orifice formant gorge (150, 151) ; et une partie d'ajustement (41) prévue sur le montant de support (4, 4A) pour être ajustée dans une cavité (150a, 151a) de l'orifice formant gorge (150, 151) ;
**caractérisé en ce que**
la partie d'ajustement (41) comporte une partie de contact (43b) qui n'entre pas en contact avec une région centrale longitudinale de la partie d'ouverture en forme d'orifice long (150b, 151b) mais qui entre en contact avec ses deux régions d'extrémité longitudinale,
dans lequel la partie d'ajustement (41) comporte une protubérance mobile (43) qui est poussée pour faire saillie latéralement depuis une surface verticale du montant de support (4, 4A), et la protubérance mobile (43) comporte la partie de contact (43b).

2. Agencement selon la revendication 1, dans lequel la protubérance mobile (43) comporte une partie d'axe (43a), et la partie d'axe (43a) comporte deux côtés dont chacun est muni de la partie de contact (43b).

3. Agencement selon la revendication 2, dans lequel la partie d'axe (43a) peut être liée à une concavité de support d'axe (4b) formée dans le montant de support (4, 4A) et peut en être déliée.

4. Agencement selon la revendication 1, dans lequel la protubérance mobile (43) est supportée par un élément d'axe (45) inséré au travers d'un orifice de support d'axe (43f) formé dans le montant de support (4, 4A).

5. Agencement selon l'une quelconque des revendications précédentes, dans lequel la protubérance mobile (43) comporte une partie en plaque (43c) qui connecte l'une à l'autre les parties de contact (43b).

6. Agencement comprenant un dispositif de fixation de récipient (1) et un orifice formant gorge (150, 151) d'une pièce de coin (100a, 101a) d'un récipient, le dispositif de fixation de récipient (1) comprenant : une bride (2) à localiser sur un côté externe de l'orifice formant gorge (150, 151) ; un montant de support (4, 4A) prévu sur la bride (2) pour être ajusté dans une partie d'ouverture en forme d'orifice long (150b, 151b) de l'orifice formant gorge (150, 151) ; et une partie d'ajustement (41) prévue sur le montant de support (4, 4A) pour être ajustée dans une cavité (150a, 151a) de l'orifice formant gorge (150, 151) ;
**caractérisé en ce que**
la partie d'ajustement (41) comporte une partie de contact (420a) qui n'entre pas en contact avec une région centrale longitudinale de la partie d'ouverture en forme d'orifice long (150b, 151b) mais qui entre en contact avec ses deux régions d'extrémité longitudinale, dans lequel la partie d'ajustement (41) comporte une protubérance fixe (42) qui fait saillie latéralement depuis une surface verticale du montant de support (4, 4A), et la protubérance fixe (42) comporte la partie de contact (420a), et
dans lequel la partie d'ajustement (41) n'est pas munie d'une protubérance mobile (43).

7. Agencement selon la revendication 6, dans lequel la partie de contact (420a) est munie d'une gorge (420b) ou d'une concavité formée dans une région centrale de la protubérance fixe (42).
